# EUROPEAN PATENT SPECIFICATION

(11) **EP 3 954 467 B1**
(45) Date of publication and mention of the grant of the patent: **08.10.2025**
(21) Application number: 20290060.1
(22) Date of filing: 10.08.2020
(51) Int. Cl.: B05B 7/06

(54) **CONSUMPTION OPTIMIZED NOZZLE ASSEMBLY**
VERBRAUCHSOPTIMIERTE DÜSENANORDNUNG
ENSEMBLE BUSE À CONSOMMATION OPTIMISÉE

(43) Date of publication of application: 16.02.2022
(73) Proprietor: A. Raymond et Cie, 38000 Grenoble (FR)
(72) Inventor: SCHULZ, Stefan, 79540 Lörrach (DE); ETIENNE, Gregory, 68100 Mulhouse (FR); JACKSON, Nicholas, 48350 Davisburg, Michigan (US)
(74) Representative: Hoffmann Eitle

(56) References cited:
- EP-A1- 0 249 186
- EP-A1- 0 705 644
- WO-A1-2015/053959
- US-A- 6 161 778
- US-A1- 2004 056 124
- US-A1- 2011 147 491
- US-A1- 2015 028 132

## Description

### FIELD OF THE INVENTION

The present disclosure generally relates to cleaning systems and devices and, more specifically, to a washer nozzle assembly and related methods and systems.

### BACKGROUND OF THE INVENTION

Various cleaning devices are utilized across myriad industries, and frequently utilize washer nozzles to deliver fluids (e.g. cleaning/washing liquid, etc.) to surfaces. For example, most commercial vehicles include one or more washer nozzles connected to a fluid source and fixed proximal to various structures (e.g. windscreens, windows, headlight lenses, etc.), in order to spray cleaning/washing liquid onto an external surface of the structure to be cleaned. Washer nozzles are also utilized to clean exterior cameras and driver assistance sensors, which are increasing in popularity and frequently available as standard or optional equipment. Self-driving and autonomous vehicles, for example, which are also increasing in popularity and production, typically require an even greater number of cameras and sensors for navigation and guidance, driving and safety, and internal performance as compared to more traditional vehicles.

Unfortunately, however, conventional washer nozzles and related cleaning devices suffer from numerous drawbacks, including a requisite increase in manufacturing costs and labor, system weight, and number of individualized components needed (e.g. for new models/designs) associated with the solutions outlined above. For example, adjustable components may become decalibrated over time from normal operation, leading to decreased effectiveness of the cleaning process. These drawbacks are especially limiting with respect to cleaning systems for cameras and sensors, particularly those associated with self-driving and/or autonomous vehicular systems, which often require more effective cleaning due to the impact of environmental elements to connected systems that can lose effectiveness and, if uncorrected, lead to impairment of normal system function and/or vehicle operation.

For example, in order to optimize the cleaning process, conventional washer nozzles typically rely on kinetic energy to clean a substrate with a given cleaning fluid. To do so, such devices utilize a pressurized cleaning fluid, which is directed onto the surface of the structure to be cleaned (e.g. via a nozzle). Over time, especially during use of a vehicle in a high-soil environment, this normal operation requires the use of an overabundance of cleaning fluid for proper function, which is wasteful and may lead to premature consumption of the cleaning fluid between normal service intervals and, ultimately, an inability to safely operate the vehicle without service.

US 2015/0028132 A1 discloses a spray nozzle assembly with impingement post diffuser. From WO 2015/053959 A1 nozzle assemblies, systems and related methods are known. US 6,161,778 A discloses an air atomizing nozzle assembly with improved air cap. From US 2011/147491 A1 an internal mix air atomizing spray nozzle assembly is known. EP 0 705 644 A1 discloses an internal mix air atomizing spray nozzle.

### SUMMARY OF THE INVENTION

An improved nozzle assembly is provided. The nozzle assembly comprises a spray element that includes an outlet and an eductor. The eductor is adapted to direct a dual-media jet through the outlet, and comprises a mixing barrel and a diffusion portion. The diffusion portion comprises an injection port disposed about a central intake duct, and the mixing barrel extends along an axis between the diffusion portion and the outlet. The nozzle assembly also comprises an active conduit for directing a first media into the eductor of the spray element, and a passive conduit adapted for passage of a second media into the eductor. The active conduit comprises an inlet, which is adapted for receiving a pressurized stream of the first media, and a pair of constricted channels that each extend between the inlet and the injection port of the spray element. The passive conduit comprises an intake, which is adapted for receiving a passive feed of the second media, and a feed shaft that extends between the intake and the central intake duct of the spray element between the pair of constricted channels of the active conduit.

A system comprising the nozzle assembly is also provided. The system comprises a first media source operatively coupled to the active conduit of the nozzle assembly, a second media source operatively coupled to the passive conduit of the nozzle assembly, and a sensor disposed adjacent the outlet such that the dual-media jet directed from the outlet of the nozzle assembly will contact a surface of the sensor.

These and other features and advantages of the present disclosure will become apparent from the following description of particular embodiments, when viewed in accordance with the accompanying drawings and appended claims.

### DESCRIPTION OF THE DRAWINGS

Figure 1 is a perspective view of a nozzle assembly in accordance with this disclosure;
Figure 2 is a cross-sectional side elevated view of the nozzle assembly, shown during operation;
Figure 3 is an elevated view of the nozzle assembly including a radial diffuser near the outlet;
Figure 4 is a front elevated view of the nozzle assembly including the radial diffuser;
Figure 5 is cross-sectional view of the nozzle assembly including the radial diffuser, shown during operation;
Figure 6 is a cross-sectional top-down view of the nozzle assembly including the radial diffuser;
Figure 7 is a cross-sectional perspective view of the nozzle assembly including the radial diffuser;
Figure 8 is a cross-sectional top-down view of the nozzle assembly including the radial diffuser, shown during operation;
Figure 9 is a cross-sectional top-down view of the nozzle assembly, shown during operation;
Figure 10 is a perspective view of the nozzle assembly including multiple outlets;
Figure 11 is a cross-sectional side elevated view of the nozzle assembly including multiple outlets;
Figure 12 is a cross-sectional top-down view of the nozzle assembly including multiple outlets;
Figure 13 is a schematic illustration of a system including the nozzle assembly;
Figure 14 is a schematic illustration of another system including the nozzle assembly; and
Figure 15 is a schematic illustration of a vehicle including the nozzle assembly system.

### DETAILED DESCRIPTION OF THE INVENTION

An improved nozzle assembly is provided. As described herein, the nozzle assembly is configured to be connected to at least two media sources, one active/motive and one passive, and disposed near a surface to be cleaned, and is adapted to prepare and direct a jet of combined media onto on the surface. As will be appreciated from the description herein, the nozzle assembly has multiple applications, but is suitable for installation on a vehicle (e.g. proximate a sensor, camera, light, lens, window/windscreen, etc.) to deliver a flow of cleaning media to a surface thereof. Moreover, the unique design and material construction of the nozzle assembly allows for increased cleaning efficiency and efficacy, decreased calibration and/or maintenance, increased useability and convenience, reduced number of parts, as well as other benefits that will be readily apparent to those of skill in the art in view of the embodiments shown and described herein. For example, by utilizing the particular media and configurations described herein, the nozzle assembly prepares an entrained cleaning media having the requisite kinetic energy for effective cleaning, while reducing consumption of cleaning fluid by up to or greater than 90% as compared to other single and/or dual-media cleaning nozzles.

Referring generally to the Figures, wherein like numerals indicate corresponding parts throughout the several views, the nozzle assembly is illustrated and generally designated at 20. The nozzle assembly 20 may be monolithic in construction (i.e., comprise but one piece, or multiple pieces that are permanently joined together) or, alternatively, may comprise multiple pieces that are releasably, removeably, or semi-permanently coupled or connected together, such that the nozzle assembly 20 may also be described or otherwise defined as the "nozzle 20", "nozzle system 20", "nozzle apparatus 20", etc. Certain features of the nozzle assembly 20 are functional, but can be implemented in different aesthetic configurations.

In general, the nozzle assembly 20 comprises three primary components: a spray element 22, an active conduit 38, and a passive conduit 44, which components are adapted to be integrally formed or otherwise operatively connected together, optionally in a releasable manner, as described in further detail below. These structures, features, and functions of the nozzle assembly 20 are described in further detail herein and illustrated by the particular embodiments shown in the Figures and described below. Like the nozzle assembly 20 as a whole, certain features of the spray element 22, the active conduit 38, and the passive conduit 44, individually, are functional, but can be implemented in different aesthetic configurations.

As introduced above, the nozzle assembly 20 includes a spray element 22. In general, the spray element 22 is configured to receive and combine together at least two different media (e.g. cleaning media) from at least two separate media sources, and adapted to form and channel a spray (e.g. a jet) of the combined media away from the nozzle assembly 20 (e.g. onto a surface to be cleaned) from an outlet 24. To do so, the spray element 22 includes an eductor 26 upstream from the outlet 24.

The eductor 26 of the spray element 22 generally comprises a mixing barrel 28 and a diffusion portion 30. As described below, the diffusion portion 30 comprises inlets through which media may be supplied to the mixing barrel 28 and, subsequently, to the outlet 24. As such, the mixing barrel 28 generally extends between and is in fluid communication with the diffusion portion 30 and the outlet 24.

As will be understood by those of skill in the art, an eductor (e.g. the eductor 26) is a jet pump designed to make use of Bernoulli's principle by flowing a jet of a working fluid (i.e., the "motive fluid") through a constriction point along a flow path (e.g. a Venturi tube, orifice plate, etc.) to increase the velocity of the motive fluid and thus produce a low pressure area along the flow path after the constriction (i.e., the "Venturi effect"). When a supply of a passive fluid is connected to the flow path via an intake located proximal to the low pressure area, the low pressure area may be utilized to draw the passive fluid into the flow path of the motive fluid (e.g. via suction, atmospheric pressure acting on the passive fluid supply, etc.). It will be appreciated that the general principles utilized in such eductors are shared with other fluid devices, including certain inspirators, aspirators, aerators, steam siphons, etc., designed around the Venturi effect. As such, while the term "eductor" is utilized herein in reference to the general function of certain portions of the spray element 22 of the nozzle assembly 20, such reference is not to limit the scope or design of the nozzle assembly 20. Rather, as will be understood by those of skill in the art in view of the drawings and description herein, the unique design of the nozzle assembly 20 in general, as well as the spray element 22 specifically, provides particular advantageous/improvements over conventional nozzle designs, e.g. in terms of operational efficiency and effectiveness (among others).

With further regard to the eductor 26, the mixing barrel 28 is not particularly limited, and may be implemented in various configurations. In general, the mixing barrel 28 is adapted to receive and direct a turbulent flow of media from the diffusion portion 30 to the outlet 24. Owing to the configuration of the media inlets of the diffusion portion 30, described further below, the mixing barrel 28 need not comprise specific mixing elements (e.g. baffles, mixing blades, etc.), but may instead be configured in the form of a simple conduit or tube defining a channel extending between the diffusion portion 30 to the outlet 24. In such embodiments, the baffleless/bladeless design may minimize disruption to the flow of media through the spray element 22 and this increase the efficiency of the nozzle assembly 20. However, in other embodiments, the mixing barrel 28 may comprise one or more mixing elements (not shown) in order to increase the homogenization of media flowing therethrough. For example, such embodiments may be utilized when the nozzle assembly 20 will be operating in confined spaces such that the spray element 22 is configured with a minimal length. In certain embodiments, the mixing barrel 28 is linear, alternatively substantially linear, and extends between the diffusion portion 30 and the outlet 24 along a central axis (not shown). In other embodiments, the mixing barrel 28 is nonlinear and describes a curved flow path.

The diffusion portion 30 of the eductor 26 is generally adapted to receive separate media flows in the form of a motive fluid and a passive fluid, and configured to prepare a single turbulent flow of media therefrom, as described in further detail below. The diffusion portion 30 of the eductor 26 is generally disposed opposite the outlet 24 about the mixing barrel 28. However, the diffusion portion 30 may be integral with the mixing barrel 28 (i.e., the diffusion portion 30 may simply describe the portion of the mixing barrel 28 distal the outlet 24), so long as otherwise configured as described herein.

As will be understood by those of skill in the art, the term "diffuser" with regard to fluid devices (e.g. eductors) generally denotes a device, or portion thereof, that increases the pressure of a fluid by slowing it down, as opposed to a "nozzle" which generally denotes a device that increases the velocity of a fluid at the expense of pressure in the same context. With regard to the diffusion portion 30, however, the term "diffusion" is used to refer to the general function of the indicated portion of the spray element 22 where separate media flows are combined, e.g. due to the Venturi effect produced by the configuration of the eductor 26. As such, the diffusion portion 30 may be separate from or, alternatively, may overlap with the mixing barrel 28. Regardless, as illustrated in the drawings, the diffusion portion 30 of the eductor 26 refers to the portion of the eductor 26 where media is introduced, and subsequently combined, within the spray element 22.

The diffusion portion 30 of the eductor 26 comprises an injection port 32 adapted for directing a motive fluid into the mixing barrel 28. More specifically, the injection port 32 is configured as a channel for receiving and directing an active (e.g. pressurized) flow of media into the mixing barrel 28. So configured, the injection port 32 may be linear or curved with respect to the flow path of the channel, and may be substantially consistent in cross-sectional area or tapered (e.g. constricting/expanding along the flow path). For example, in certain embodiments, the injection port 32 decreases in diameter along the flow path into the mixing barrel 28 proximal the diffusion portion 30. In other embodiments, the injection port 32 comprises a constant, alternatively a substantially constant, diameter along the flow path into the diffusion portion 30. In yet other embodiments, the injection port 32 increases in diameter along the flow path into the mixing barrel 28. As will be understood by those of skill in the art, in order to achieve the desired function of the eductor 26, the particular configuration of the injection port 32 will be selected in view of the components of the nozzle assembly 20 upstream from the injection port 32, which components are described below. Typically, the injection port 32 is configured as an axial duct to direct the active flow of media annularly about a central axis (not shown) extending along the flow path into the mixing barrel 28. In some such embodiments, the injection port 32 is configured to annularly direct the active flow of media through the diffusion portion 30 along a flow path coaxial with the mixing barrel 28. So configured, the injection port 32 allows for passage of a passive media into the center of the active flow of media, as described below, for increased mixing and, optionally entrainment, of the passive media in the active media (e.g. to give a homogenous, alternatively substantially homogeneous two-phase flow of media).

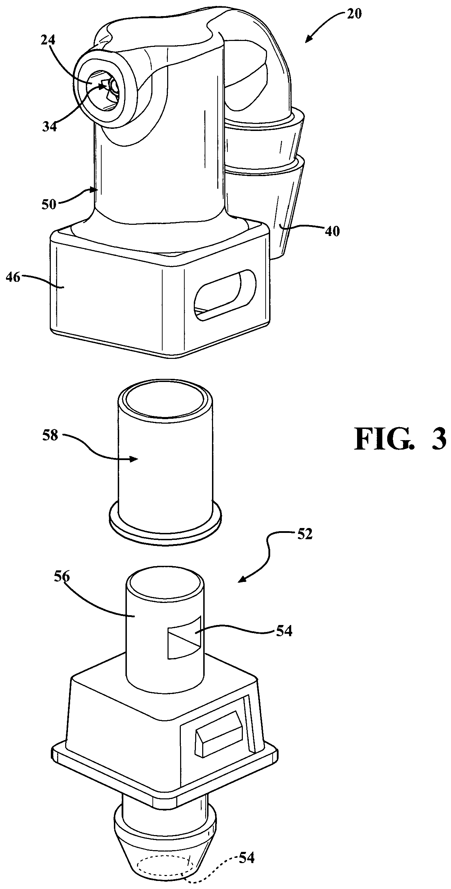

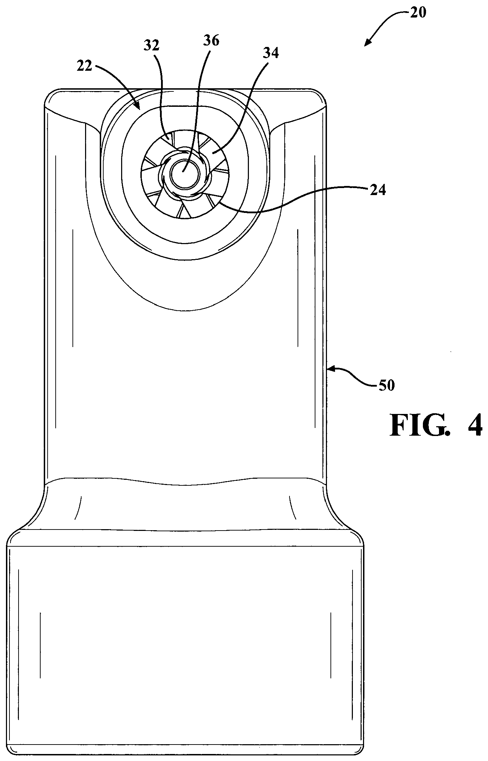

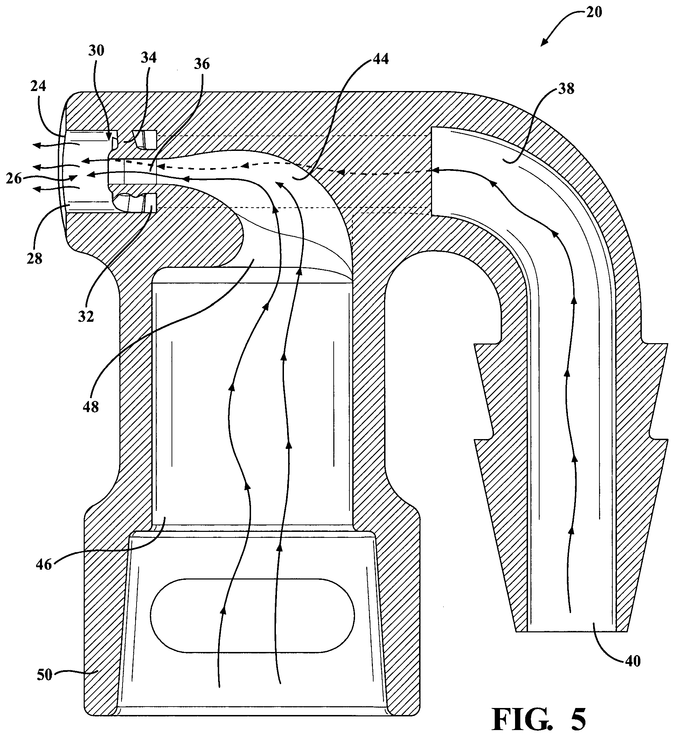

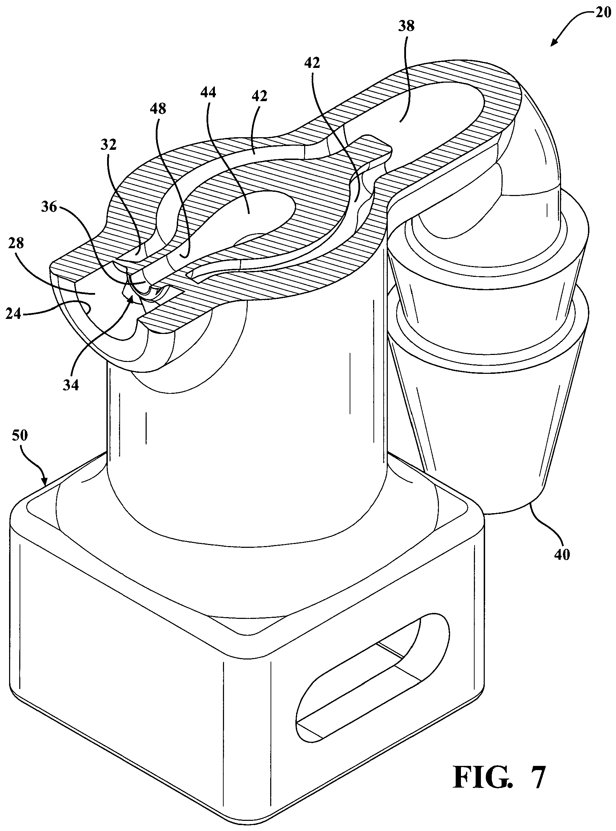

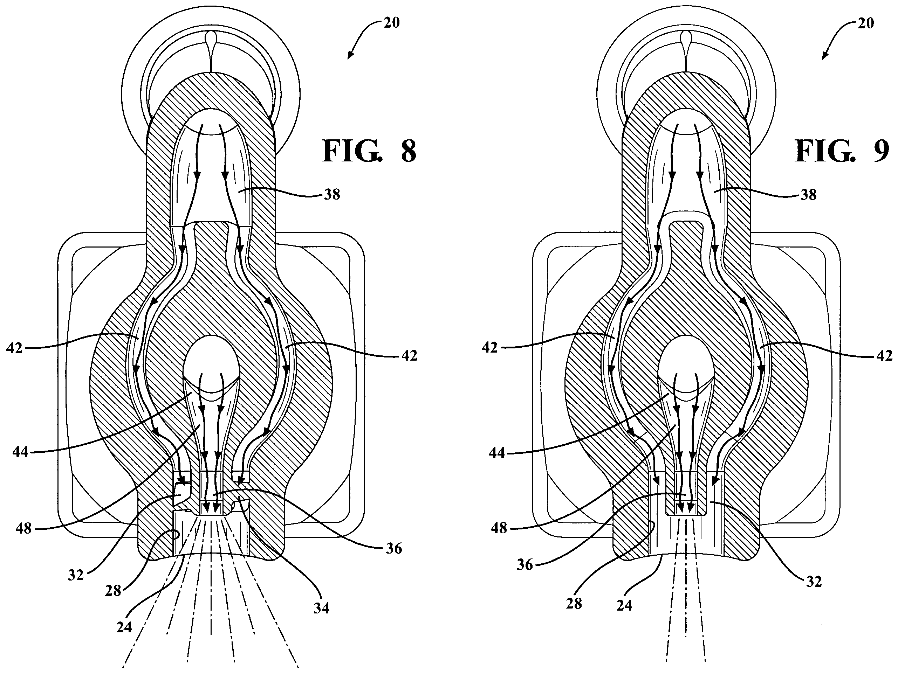

In some embodiments, the spray element 22 comprises a radial diffuser 34 composed of a series of blades, vanes, fins or other protrusions (generally referred to herein as "vanes" for simplicity) disposed in the flow path of the injection port 32 at the diffusion portion 30. Such vanes and like features are generally used to provide impingement surfaces, which function to both break apart a stream of media into droplets, as well as to direct the flow of the media (e.g. in the form of droplets) into a particular flow pattern For example, in certain embodiments, as shown in Figures 3-5 and 7-8, the spray element 22 comprises the radial diffuser 34 as a series of such vanes disposed annularly within the diffusion portion 30 in the general form of a turbine, which is adapted to impart a desired pattern to a spray of media being delivered via the nozzle assembly (i.e., a "spray pattern"). As will be appreciated by those of skill in the art, the radial diffuser 34 may comprise any number of individual vanes, which will generally be selected based on the desired dimensions of the nozzle assembly 20 and/or individual components thereof, such as the diameter of the outlet 24, the diameter of the mixing barrel 28, etc. Likewise, the size, shape, and geometry of the nozzle vanes are not particularly limited, and may also be selected in view of the nozzle assembly 20 as a whole, as well as individual components thereof. For example, as described in detail below, the diffusion portion 30 of the eductor 26 comprises an intake to allow passage of fluid into the center of the flow path of the motive fluid when directed into the mixing barrel via the injection port 32. In such embodiments, the vanes of the radial diffuser 34 will generally be disposed radially about the central intake within the diffusion portion 30, such that the radial diffuser 34 is adapted to impart a helical pattern to motive fluid injected into the mixing barrel 28 via the injection port 32. As the mixing barrel 28 is in communication with the outlet 24, the inclusion of the radial diffuser 34 may be utilized to configure the nozzle assembly 20 as a spiral-type spray nozzle, as will be understood by those of skill in the art. As will be appreciated in view of the description of the other components of the spray element 22, in such embodiments, the nozzle assembly 20 is typically configured as a full-cone spray nozzle in order to deliver media across an entire area of a surface, rather than as a hollow-cone pattern, which may be utilized if a hollow spray pattern is desired.

As described above, the configuration of the radial diffuser 34 is not particularly limited, and may be varied to provide the nozzle assembly 20 with a desired spray pattern. For example, in some embodiments, the vanes of the radial diffuser 34 comprise a center pitch of from 5° to 50°, such as a pitch of 10°, 20°, or 30°. Likewise, some such embodiments, the vanes of the radial diffuser 34 comprise a swirl of from 15° to 25°, such as a 20° swirl. Dimensions outside these ranges may also be utilized. As such, it will be appreciated that the radial diffuser 34 provides the nozzle assembly 20 with a variable component that may be used to selectively adjust the angle of a spray cone produced during operation of the nozzle assembly 20 as described herein (e.g. via selecting the degree of pitch of the vanes of the radial diffuser 34). While particular embodiments of the nozzle assembly 20 include the radial diffuser 34, other types of spray-directing/patterning elements may be used in addition to, or in place of the radial diffuser 34.

The diffusion portion 30 of the eductor 26 comprises an intake duct 36 adapted for directing a passive fluid (e.g. a media) into the mixing barrel 28. More specifically, the intake duct 36 is configured as a channel for receiving and directing a flow of media into the mixing barrel 28. So configured, the intake duct 36 may be linear or curved with respect to the flow path of the channel, and may be substantially consistent in cross-sectional area or tapered (e.g. constricting/expanding along the flow path). For example, in certain embodiments, the intake duct 36 decreases in diameter along the flow path into the mixing barrel 28 proximal the diffusion portion 30. In other embodiments, the intake duct 36 comprises a constant, alternatively a substantially constant, diameter along the flow path into the mixing barrel 28. In yet other embodiments, the intake duct 36 increases in diameter along the flow path into the mixing barrel 28. As will be understood by those of skill in the art, in order to achieve the desired function of the eductor 26, the particular configuration of the intake duct 36 will be selected in view of the components of the nozzle assembly 20 upstream and/or parallel from the intake duct 36, such as the injection port 32, which components are described herein. Typically, the intake duct 36 is configured as a linear channel adapted to direct the passive flow of media along a central axis (not shown) extending along the flow path into the mixing barrel 28. In some embodiments, the intake duct 36 is configured to direct the passive flow of media through the diffusion portion 30 along a central flow path coaxial with the mixing barrel 28. So configured, the intake duct 36 may direct the passive media into the center of the active flow of media, e.g. when the injection port 32 is configured as the axial duct as described above. In this configuration, the intake duct 36 may be referred to as the central intake duct 36. When the central intake duct 36 is utilized in this fashion, the eductor 26 provides for increased mixing and, optionally entrainment, of the passive media in the active media (e.g. to give a homogenous, alternatively substantially homogeneous two-phase flow of media).

As introduced above, the spray element 22 comprises the outlet 24 downstream from the mixing barrel 28. The size and/or shape of the outlet 24 is not limited, and will be generally selected based on the dimensions of the other components of the spray element 22 (e.g. the diameter, length, and/or volume of the mixing barrel 28, etc.) in order to expel media passed therein as a jet from the outlet 24. As such, the outlet 24 can be configured to produce various spray patterns, e.g. a fan spray, a jet spray, etc. For example, in certain embodiments, a spray-building element (e.g. an insert, limiter, director, rotator, etc. (not shown)) can be provided at the outlet 24 to achieving or otherwise configure/produce particular spray patterns (e.g. focused/directed jet sprays, oscillating sprays, combinations of jet and fan sprays, etc.). In these or other embodiments, the outlet 24 may be adapted to work in concert with another component of the spray element 22 (e.g. the radial diffuser 34) to direct a spray of media therefrom. As such, it will be understood that the outlet 24 may be an isolable component of the spray element 22, or may instead refer to an end of the mixing barrel 28 open to outside of the nozzle assembly 20.

As introduced above, the nozzle assembly 20 includes an active conduit 38. In general, the active conduit 38 is configured to receive an active (i.e., pressurized) media (e.g. from a media source), and adapted to channel and inject the active media into the diffusion portion 30 of the spray element 22 via the injection port 32.

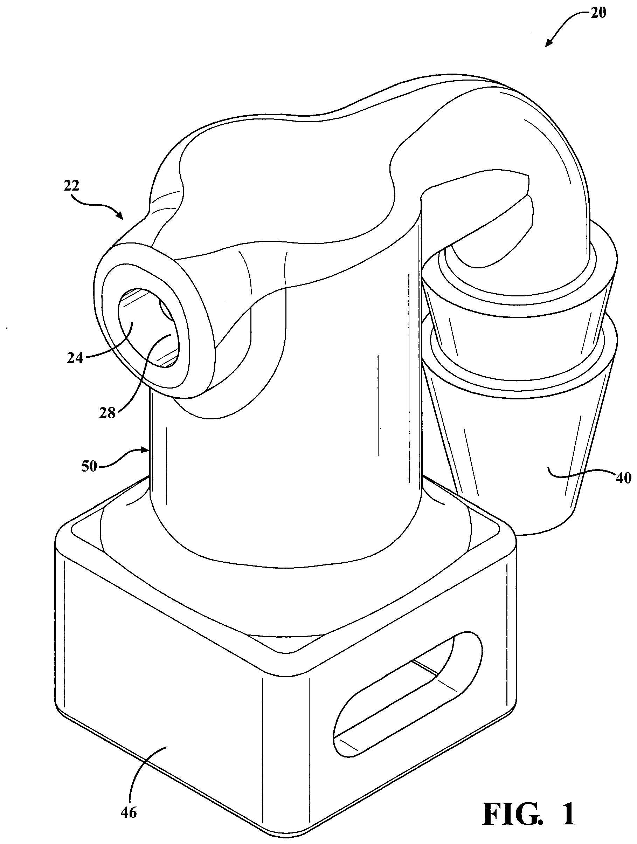

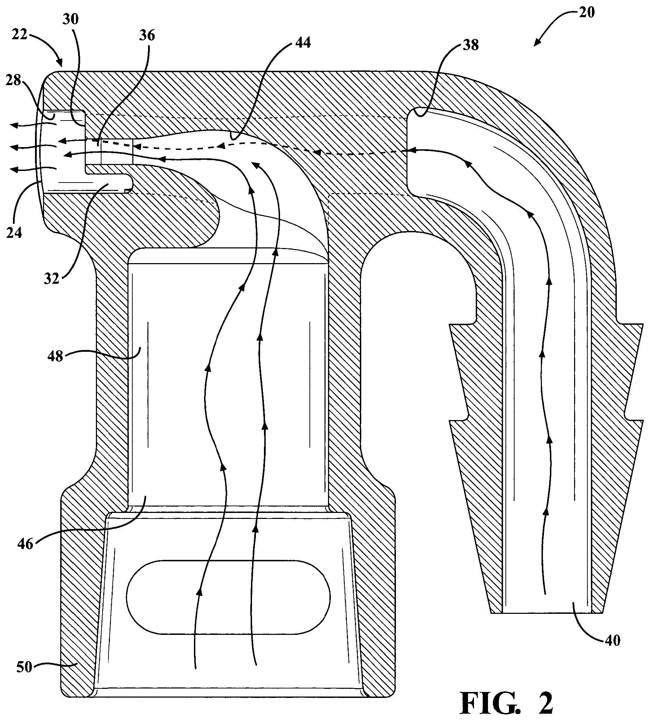

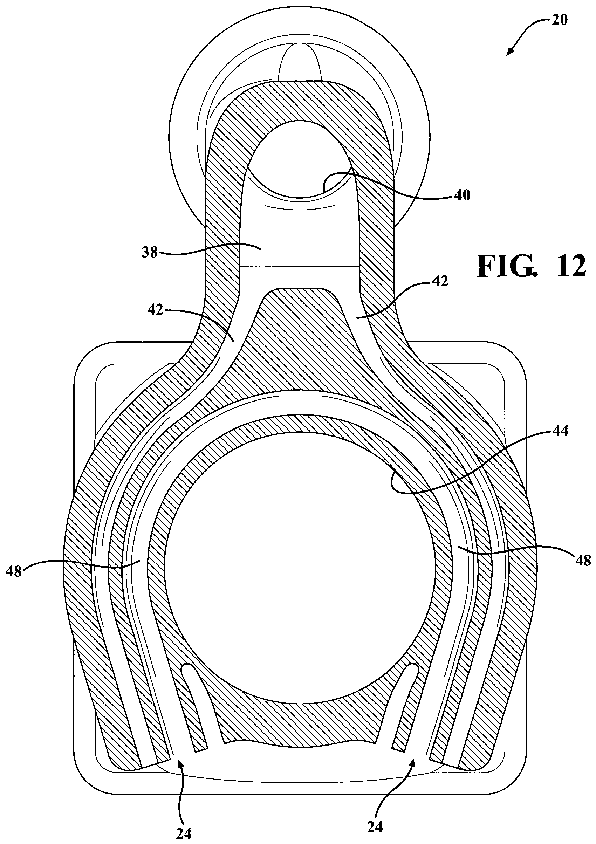

As shown in Figures 2, 5-9, and 11-12, the active conduit 38 generally extends between an inlet 40 and the injection port 32 of the spray element 22. The inlet 40 is not particularly limited, and typically comprises connection means for securing additional components to a portion thereof. Suitable connection means include fasteners (e.g. threaded fasteners such as bolts, screws, etc., push fasteners, clamp fasteners, etc.) connectors (e.g. quick connectors, threaded connectors/connections, etc.), couplings (e.g. male-female couplings, press-couplings, etc.) clamps, adhesives, and the like, as well as various combinations thereof. For example, in the embodiments illustrated by Figure 1, the inlet 40 is configured as a male barbed coupling, e.g. for securably receiving a hose or other suitable female-type coupling. It is to be understood that other components connectible nozzle assembly 20 via the inlet 40 will generally comprise a tubular structure to allow for passage of fluid into the active conduit 38, such that suitable connection means for the inlet 40 may comprise any type of fastener/connector/coupling that allows for fluid ingress into the active conduit 38.

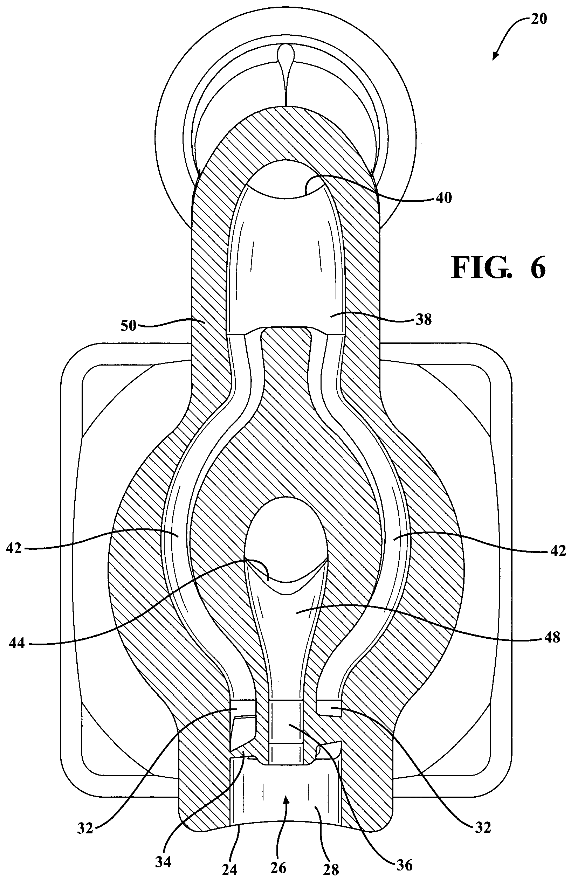

As shown in Figures 6-9, the active conduit 38 comprises a pair of channels 42, which each extend between the inlet 40 and the injection port 32 of the spray element 22. The channels 42 are generally adapted to each receive a portion of media injected into the active conduit 38 (e.g. via the inlet 40), and are otherwise not particularly limited. In particular, the channels 42 may comprise any dimensions suitable for use in connection with the other components, and functions thereof, of the nozzle assembly 20, as described herein. As such, the size (e.g. diameter, volume, etc.) of each of the channels 42 may be independently selected, e.g. to control the rate at which media may be injected into the spray element 22 via the injection port 32. For example, the channels 42 may be substantially consistent in cross-sectional area or tapered (e.g. constricting/expanding along the flow path to the injection port 32).

In certain embodiments, each of the channels 42 decreases in cross-sectional area (i.e., reduces in diameter) along the flow path from the inlet 40 to the injection port 32. In other embodiments, each of the channels 42 comprises a constant, alternatively a substantially constant, diameter along the flow path into the injection port 32. Typically, the channels 42 each comprise a cross-sectional area that is less than the cross-sectional area of the active conduit 38 at the inlet 40. In such embodiments, the channels 42 may be referred to as the constricted channels 42. In certain embodiments, the constricted channels 42 comprise a collective cross-sectional area that is less than the cross-sectional area of the active conduit 38 at the inlet 40.

Typically, each of the channels 42 describes a curved path coplanar with the flow path of the active conduit 38 at the injection port 32, such that the channels 42 diverge away from one another along the flow path proximal the inlet 40 so as to form a space therebetween, and then converge with one another proximal the injection port 32. In such embodiments, as shown in Figures 6-9 and described in further detail below, the channels 42 are disposed on opposing sides of the passive conduit 44.

As introduced above, the nozzle assembly 20 includes a passive conduit 44. In general, the passive conduit 44 is configured to facilitate passage of a passive (i.e., non-pressurized) media therethrough, e.g. from a media source to the intake duct 36 of the spray element 22.

As shown in Figures 2, 5-9, and 11-12, the passive conduit 44 generally extends between an intake 46 and the intake duct 36 of the spray element 22. The intake 46 is not particularly limited, and typically comprises connection means for securing additional components to a portion thereof. Suitable connection means include those as described above with regard to the inlet 40, as well as other particular configurations described further below. In general, however, it is to be understood that other components connectible to the nozzle assembly 20 via the intake 46 will generally comprise a tubular structure to allow for passage of fluid into the passive conduit 44, such that suitable connection means for the intake 46 may comprise any type of fastener/connector/coupling that allows for fluid ingress into the passive conduit 44.

The passive conduit 44 generally comprises a feed shaft 48 that extends between the intake 46 and the intake duct 36 of the spray element 22. The feed shaft 48 is generally adapted to channel media along a flow path from the intake 46 to the intake duct 36, and is otherwise not particularly limited. In particular, the feed shaft 48 may comprise any dimensions suitable for use in connection with the other components, and functions thereof, of the nozzle assembly 20, as described herein. As such, the size (e.g. diameter, volume, etc.) of the feed shaft 48 may be independently selected, e.g. to control the rate at which media may be passed into the spray element 22 via the intake duct 36. For example, the feed shaft 48 may be substantially consistent in cross-sectional area or tapered (e.g. constricting/expanding along the flow path to intake duct 36). In certain embodiments, the feed shaft 48 decreases in cross-sectional area (i.e., reduces in diameter) along the flow path from the intake 46 to the intake duct 36.

Typically, the feed shaft 48 describes a curved path, such that the flow path at the intake 46 is substantially perpendicular to the flow path at the intake duct 36. In this fashion, such as in the embodiments illustrated in Figures 1-9, the feed shaft 48 of the passive conduit 44 is typically disposed between the diverging portions of the channels 42 of the active conduit 38 described above. So configured, the feed shaft 48 provides a media flow path to the central intake duct 36, and the channels 42 provide media flow paths that converge at the axial injection port 32. In this configuration, in operation, the active conduit 38 will supply a motive media/fluid to the eductor 26 of the spray element 22 (e.g. via the axial injection port 32) and the passive conduit 38 will supply a passive media/fluid to the eductor 26 of the spray element 22 (e.g. via the central intake duct 36). In this fashion, during operation, the nozzle assembly 22 will comprise a flow of active media annularly about a central axis through the diffusion portion 30, and a flow of passive media into the center of the active media flow, such that a flow of combined media will be provided in the mixing barrel 28 and, ultimately, sprayed from the outlet 24.

With regard to the active conduit 38 and the passive conduit 44 (collectively, the "media conduits"), as will be appreciated by those of skill in the art, the particular dimensions are not limited, and will typically be independently selected based on the function of the components described herein and an intended use of the nozzle assembly 20. As such, the media conduits may independently be of any length, width, diameter, etc. Regardless of the overall shape, however, it will be understood that the media conduits adapted for axial flow of media (e.g. fluid) therethrough, such that each of the media conduits defines an internal duct through with media may flow into the spray element 22. Typically, the media conduits are substantially tubular in shape in order to facilitate efficient and effective passage of media (e.g. axial flow of fluid) therethrough. Likewise, each media conduit may independently comprise an interior surface (e.g. of the internal duct) that is bare, or coated/treated, e.g. to modify (i.e., increase/decrease) a property thereof, such as lubricity, chemical resistance, toughness, etc.

In addition to the primary components described above, the nozzle assembly 20 typically comprises a housing 50. The housing 50 serves as an exterior body to house and/or define certain components of the nozzle assembly 20 and, optionally, to connect the nozzle assembly 20 to other components and/or systems. In particular, the housing 50 is typically adapted to enclose the spray element 22, the channels 42 of the active conduit 38, and the feed shaft 48 of the passive conduit 44. In certain embodiments, the housing 50 encloses the spray element 22, the active conduit 38, and the passive conduit 44.

As will be understood by those of skill in the art in view of this disclosure, aside from the particular features described herein, the housing 50 is not particularly limited (e.g. in terms of shape, dimension, additional functions, etc.), and will be selected and/or configured by those of skill in the art, e.g. in view of the particular spray element 22 utilized, a planned use of the nozzle assembly 20, etc. The housing 50 may be monolithic in construction (i.e., comprise but one piece, or multiple pieces that are permanently joined together) or, alternatively, may comprise multiple pieces that are releasably, removeably, or semi-permanently coupled or connected together. When the housing 50 comprises multiple pieces/components, the housing may be assembled by coupling together the pieces/components using any suitable mechanical coupling or other interlock, such as a snap fit coupling or joint. In certain embodiments, one or more pieces/components of the housing 50 can be integrally formed with one another, such as by plastic injection molding, additive manufacturing, etc.

In certain embodiments, as shown with particularity in Figure 3, the nozzle assembly 20 comprises an adapter 52. In general, the adapter 52 is configured to be operatively coupled to the housing 50 proximal the intake 46 of the passive conduit 44, e.g. to provide a connection/attachment point for an external component (e.g. a media source) thereto. The attachment is not particularly limited, and is typically configured as a male or female coupling adapted to be connected/coupled to an external component (e.g. a hose connected to a fluid source, etc.).

Aside from the particular features described herein, the adapter 52 is not particularly limited (e.g. in terms of shape, dimension, additional functions, etc.), and will be selected and/or configured by those of skill in the art, e.g. in view of the configuration of the intake 46, one or more portions/components of the housing 50, other external components to be connected thereto, etc. Typically, when utilized, the nozzle assembly 20 comprises the adapter 52 as a separate component releasably coupled to and in sealed relation with the housing 50 proximal the intake 46. As such, in particular embodiments, the adapter 52 comprises connection means (not shown), which is/are means for securing the adapter 52 to the housing 50. In such embodiments, suitable connection means include fasteners (e.g. threaded fasteners such as bolts, screws, etc., push fasteners, clamp fasteners, etc.) connectors (e.g. quick connectors, threaded connectors/connections, etc.), couplings (e.g. male-female couplings, press-couplings, etc.) clamps, adhesives, and the like, as well as various combinations thereof. Accordingly, it is to be understood that the housing 50 of the nozzle assembly 20 may also comprise connection means, which, together with the connection means of the adapter 52, may be cooperatively adapted to engage one another to couple/connect together the adapter 52 and the housing 50.

As will be appreciated from the description herein, the adapter 52 is configured for fluid passage therethough, i.e., such that media can be passed through the adapter 52 and to the intake 46. As such, the adapter 52 itself comprises an internal duct 54 that passes therethrough. In certain embodiments, the adapter 52 comprises a check valve configured for unidirectional flow into the housing 50, and ultimately the intake 46 of the passive conduit 44, i.e., for preventing backflow from the passive conduit **44** through the adapter 52. Aside from this function, the check valve is not particularly limited, and may comprise any components and/or configurations suitable for use in/as a check valve known in the art.

In certain embodiments, as illustrated in Figure 3, the adapter 52 comprises a neck 56 through which the duct 54 passes, generally perpendicular to the flow path of the duct 54 within other portions of the adapter 52. In these embodiments, the check valve comprises an elastically deformable sleeve 58 configured to be disposed about the neck 56. In such embodiments, the neck 56 acts as a valve stem and the sleeve 58 as a gate to interfere with passage of fluid through the adapter 52, e.g. by movement into or out of a valve seat formed in a receiver portion of the housing 50 (not shown). It is to be appreciated that other styles/configurations of check valves may also be employed and/or utilized in the nozzle assembly 20, compose a portion of the adapter 52, and/or another component of the housing 50, and/or comprise additional component parts such as return springs, plungers, diaphragms, etc.

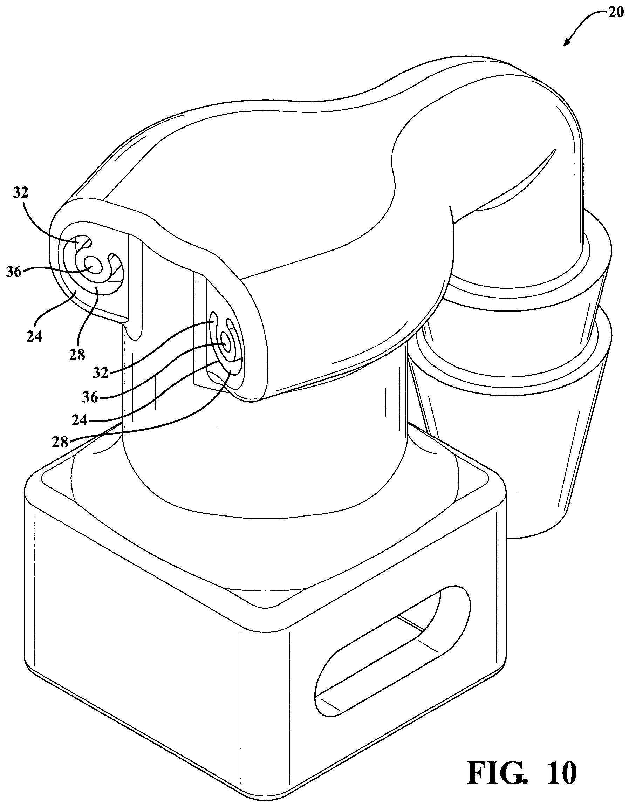

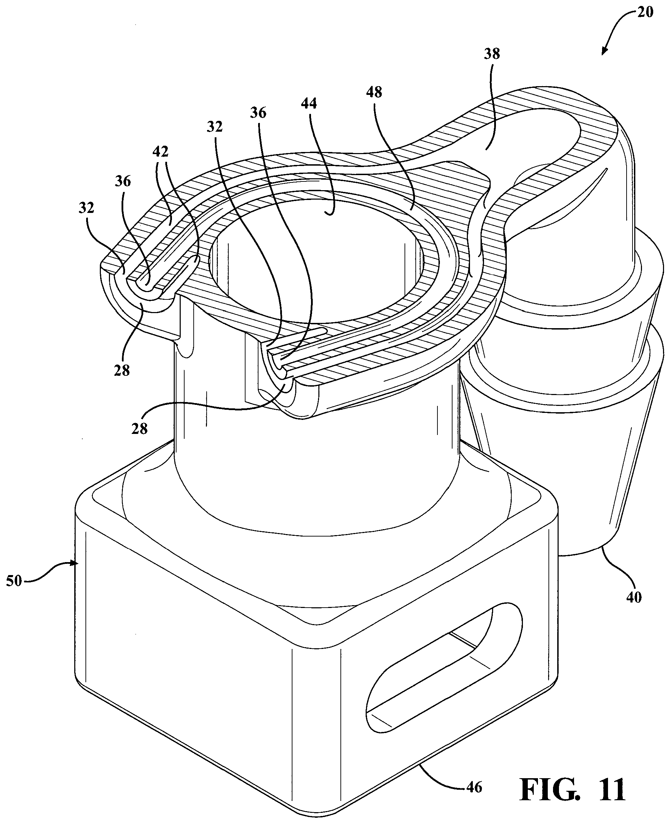

While described above in terms of a single spray element 22, the nozzle assembly 20 may comprise more than one spray element 22, such as two, three, four, or five separate spray elements 22, which may be independently configured and located about the housing 50. For example, as shown in Figures 10-12, the nozzle assembly 20 may comprise a pair of spray elements 22, such that the nozzle assembly 20 comprises two outlets 24 from which media can be sprayed during operation. In such embodiments, as shown in Figures 11-12, each spray element 22 comprises an injection port 32 in communication with a channel 42 of the active conduit 38, an intake duct 36 in communication with the feed shaft 48 of the passive conduit 44, and an outlet 24 through which media can be delivered during operation of the nozzle assembly 20. While not shown, each spray element 22 may also comprise the radial diffuser 34 described above in connection with selectively modifying/selecting a pattern (e.g. cone angle size) of spray from the outlet 24. Typically, when more than one spray element 22 is utilized, the spray elements 22 are cooperatively configured to comprise an overlapping spray range, e.g. for delivering media to the same or overlapping portion(s) of a surface.

The various component parts of the nozzle assembly 20 described above (e.g. the spray element(s) 22, the media conduits 38, 44, the housing 50, etc.), and portions of such component parts (e.g. the inlet 40 and channels 42 of the active conduit 38, etc.) may be manufactured of the same or different material(s), such as any one or more of the materials described below.

For example, in some embodiments, the spray element 22 is monolithic in construction and substantially homogeneous in composition with respect to the outlet 24, the eductor 26, the injection port 32, the intake duct 36 and, when present, the radial diffuser 34. Likewise, in some embodiments, the active conduit 38 is monolithic in construction and substantially homogeneous in composition with respect to the inlet 40 and the channels 42, and the passive conduit 44 is monolithic in construction and substantially homogeneous in composition with respect to the intake 46 and the feed shaft 48. In these or other embodiments, the housing 50 is monolithic in construction and substantially homogeneous in composition with the active conduit 38 and/or the passive conduit 44. However, it is to be appreciated that any component, such as the housing 50, may independently comprise multiple component parts of varying compositions joined together. Moreover, each component part may itself comprise a combination of different materials, and thus may not comprise a homogeneous composition throughout. For example, in certain embodiments, the nozzle assembly 20 comprises the adapter 52 as an individual (e.g. isolable) component joined to a monolithic construction comprising the housing 50.

In general, materials suitable for use in or as the nozzle assembly 20 and/or the component parts thereof include metals (e.g. steels, aluminums, alloys, etc.), resins (e.g. thermoset and/or thermoplastic resins), and combinations thereof. However, myriad materials may be used to manufacture the component parts and various elements of the nozzle assembly 20, with each typically being selected as a function of availability, cost, performance/end use applications, etc. As such, metals, metal alloys, and resins are not exhaustive of suitable materials that may be used. Additionally, it is to be appreciated a surface or portion thereof of a particular component part of the nozzle assembly 20 may be coated, painted, and/or impregnated with a material having desired characteristics including, but not limited to, those described above or below. Moreover, one of skill in the art will readily appreciate that particular materials will be selected based on the features and/or functions of the nozzle assembly 20 or particular component parts thereof (e.g. the flexibility and resiliency of the elastically deformable sleeve 58, etc.).

In various embodiments, the nozzle assembly 20 comprises a resin. Examples of suitable resins typically comprise the reaction product of a monomer and a curing agent, although resins formed of self-polymerizing monomers (i.e., those acting as both a monomer and a curing agent) may also be utilized. It is to be appreciated that such resins are conventionally named/identified according to a particular functional group present in the reaction product. For example, the term "polyurethane resin" represents a polymeric compound comprising a reaction product of an isocyanate (i.e., a monomer) and a polyol (i.e., a chain extender/ curing agent). The reaction of the isocyanate and the polyol create urethane functional groups, which were not present in either of the unreacted monomer or curing agent. However, it is also to be appreciated that, in certain instances, resins are named according to a particular functional group present in the monomer (i.e., a cure site). For example, the term "epoxy resin" represents a polymeric compound comprising a cross-linked reaction product of a monomer having one or more epoxide groups (i.e., an epoxide) and a curing agent. However, once cured, the epoxy resin is no longer an epoxy, or no longer includes epoxide groups, but for any unreacted or residual epoxide groups (i.e., cure sites), which may remain after curing, as understood in the art. In other instances, however, resins may be named according to a functional group present in both the monomer and the reaction product (i.e., an unreacted functional group).

In some embodiments, the resin is selected from thermoset resins and thermoplastic resins. Examples of suitable thermoset and/or thermoplastic resins typically include polyamides (PA), such as Nylons; polyesters such as polyethylene terephthalates (PET), polybutylene terephthalates (PBT), polytrimethylene terephthalates (PTT), polyethylene naphthalates (PEN), liquid crystalline polyesters, and the like; polyolefins such as polyethylenes (PE), polypropylenes (PP), polybutylenes, and the like; styrenic resins; polyoxymethylenes (POM) such as acetal homopolymer; polycarbonates (PC); polymethylmethacrylates (PMMA); polyvinyl chlorides (PVC); polyphenylene sulfides (PPS); polyphenylene oxide (PPO), polyphenylene ethers (PPE); polyimides (PI); polyamideimides (PAI); polyetherimides (PEI); polysulfones (PSU); polyethersulfones; polyketones (PK); polyetherketones (PEK); polyetheretherketones (PEEK); polyetherketoneketones (PEKK); polyarylates (PAR); polyethernitriles (PEN); resol-type; epoxy resins, urea-type (e.g. melamine-type); phenoxy resins; fluorinated resins, such as polytetrafluoroethylenes; thermoplastic elastomers, such as polystyrene types, polyolefin types, polyurethane types, polyester types, polyamide types, polybutadiene types, polyisoprene types, fluoro types, and the like; and copolymers, modifications, and combinations thereof. Particular resins will be selected by those of skill in the art, e.g. based on material to be mixed, environment in which the nozzle assembly 20 is to be used, the manufacturing method(s) and/or technique(s) selected to prepare the nozzle assembly 20 and/or the component parts thereof, etc.

The nozzle assembly 20 is not limited to any particular application, or with regard to any particular media, so long as such media is compatible with the materials composing the nozzle assembly itself. Typically, the media is a fluid media (or simply a "fluid"). Suitable fluids include liquids, air, and mixes thereof, as well as fluid suspensions comprising solid particles. Examples of such fluid media include various cleaning compositions and fluids known in the art, such as cleaning solutions (e.g. comprising soaps, surfactants, solvents, etc.), rinsing solutions (e.g. comprising water, rinsing aids, drying aids, etc.), drying fluids (e.g. air, etc.) and the like, as well as derivatives, modifications, and combinations thereof.

Typically, the nozzle assembly 20 is utilized in connection with two different media sources. More specifically, the active conduit 38 is typically adapted for directing a pressurized stream of a first media (the "active media") and the passive conduit 44 is adapted for passage of a second media (the "passive media"). The active media and passive media, which may also be referred to as the "active fluid" and "passive fluid", respectively, are independently selected, and are typically different from each other.

For example, in certain embodiments, the nozzle assembly 20 is adapted for using a compressed gas as the active fluid, and a liquid composition (e.g. solution, emulsion, suspension, etc.) as the passive fluid. In some such embodiments, the nozzle assembly 20 is adapted for using compressed air as the active fluid and a liquid cleaning solution as the passive fluid. In these embodiments, the nozzle assembly 20 provides unique benefits by utilizing compressed air as a carrier (i.e., the active fluid) to provide a spray of media having the kinetic energy required for cleaning a surface. The cleaning solution (i.e., the passive fluid) is supplied passively to the media via the eductor 26 of the spray element 22, which is designed to provide a flow of a homogeneous two-phase cleaning fluid comprising air and fluidic droplets. In this fashion, the spray provides both beneficial kinetic energy (i.e., via the air) as well as solvent effects (i.e., via the cleaning solution) to maximize cleaning efficacy and performance while minimizing the consumption of cleaning fluid via utilizing the passive supply. Moreover, the unique design of the nozzle assembly 20 provides means for rapid adaptation to a wide variety of substrate geometries via inclusion of optional vanes (e.g. via the radial diffuser 34), which may be included to provide a spray cone with a larger angle, or to otherwise alter/tailor the spray pattern of the nozzle assembly 20.

The nozzle assembly 20 may be used in myriad applications to deliver diverse types of media to a variety of surfaces. As but one exemplary application, the nozzle assembly 20 is suitable to use as, or in connection with, a cleaning system (e.g. for cleaning sensors, windows, etc.). For example, the design of the nozzle assembly 20 provides for a compact and efficient cleaning device suitable for use in cleaning a variety of different vehicular surfaces. As such, a method for cleaning a surface with the nozzle assembly 20 is provided. The method comprises providing a passive supply of a second media (e.g. a cleaning solution) to the passive conduit **44** of the nozzle assembly 20 via the intake 46. The method also comprises delivering a pressurized stream of a first media (e.g. compressed air) to the active conduit 38 of the nozzle assembly 20 via the inlet 40, such that the first media is flowed through the eductor 26 and entrains a portion of the second media to give a two-phase media, which is expelled from the outlet 24.

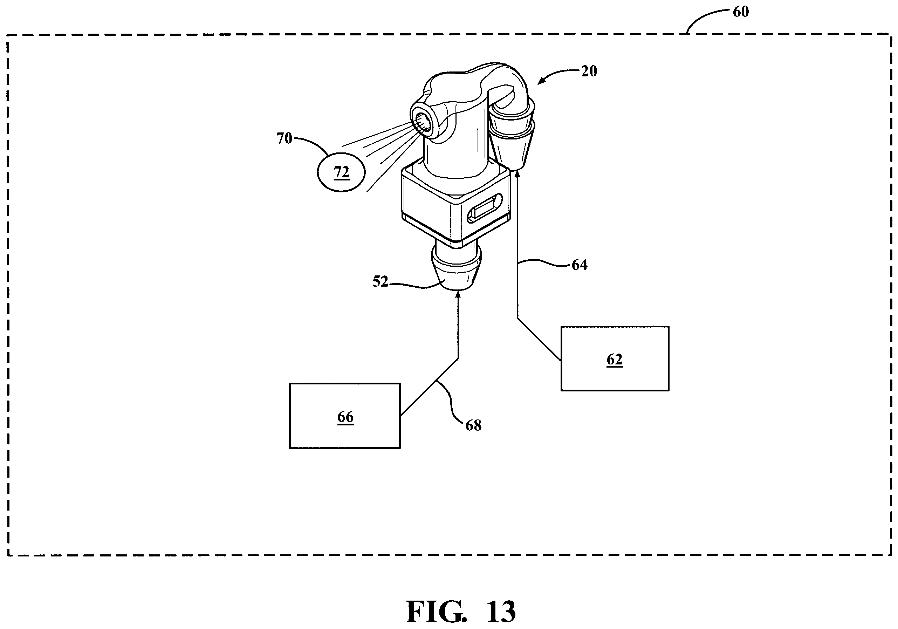

A system 60 comprising the nozzle assembly 20 is also provided, and illustrated schematically in Figure 13. In addition to the nozzle assembly 20, the system 60 includes a first media (e.g. active fluid) source/supply 62, and an active fluid flow path 64 supplying active fluid (e.g. compressed/pressurized air) from the first media source 62 to the inlet 40 of the active conduit 38. The system 60 also includes a second media (e.g. passive fluid) source/supply 66 (e.g. a reservoir, tank, etc.), and a passive fluid flow path 68 supplying passive fluid (e.g. a cleaning solution) from the second media source 66 to the intake 46 of the passive conduit 44. Typically, the nozzle assembly 20 is positioned to deliver a combination of the first and second fluids/media to the surface 72 of an object 70 to be cleaned (e.g. a camera, sensor, glass/window pane, etc.).

In certain embodiments, the passive fluid flow path 68 supplies the passive fluid to the intake 46 of the passive conduit 44 via the adapter 52 described above. In some such embodiments, the adapter 52 comprises the check valve, also described above, to control the flow of the passive fluid through the nozzle assembly 20 (e.g. to prevent backflow).

The system 60 may comprise any number of additional components aside from those particularly described herein. For example, any number of conduits, ducts, tubing, hoses, fluid connectors, valves, controllers, and/or manifolds (not shown) may also be utilized to fluidly couple the various components of the system 60 together and/or other provide the fluid flow paths 64, 68 from the fluid sources 62, 66 to the inlet 40 and intake 46, respectively. Likewise, it is to be appreciated that the active fluid utilized during operation of the nozzle assembly 20 is typically put under pressure via an external system, e.g. a pump or compressor (not shown). As such, the system 60 may comprise a compressed air supply, an air compressor, a pump, or the like. The specific pressures suitable for use with the nozzle assembly 20 (e.g. in the system 60) are not particularly limited, and will be selected in view of the configuration of the nozzle assembly 20 being utilized, e.g. the pressure/volume/flowrate necessary to draw passive fluid into the flow path via the eductor 26, provide enough kinetic energy for effective cleaning, etc. For example, the operating pressures may be from greater than 0 to 20 bar, such as from 1 to 15, alternatively from 1 to 10 bar, inclusive. However, it is to be appreciated that pressures outside these ranges may also be utilized. In certain embodiments, the system 60 comprises a heating element (not shown) for heating the cleaning fluid before it is applied to the surface 72.

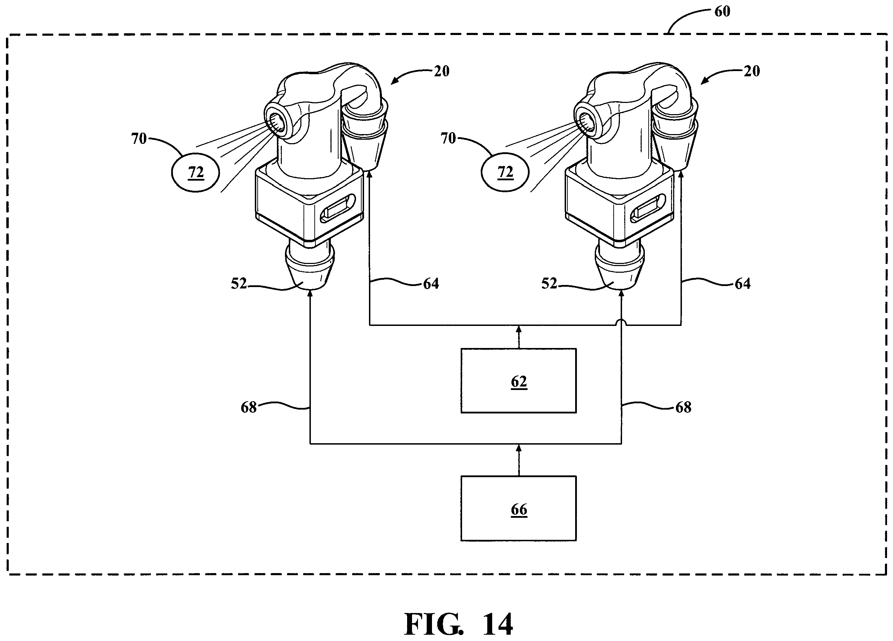

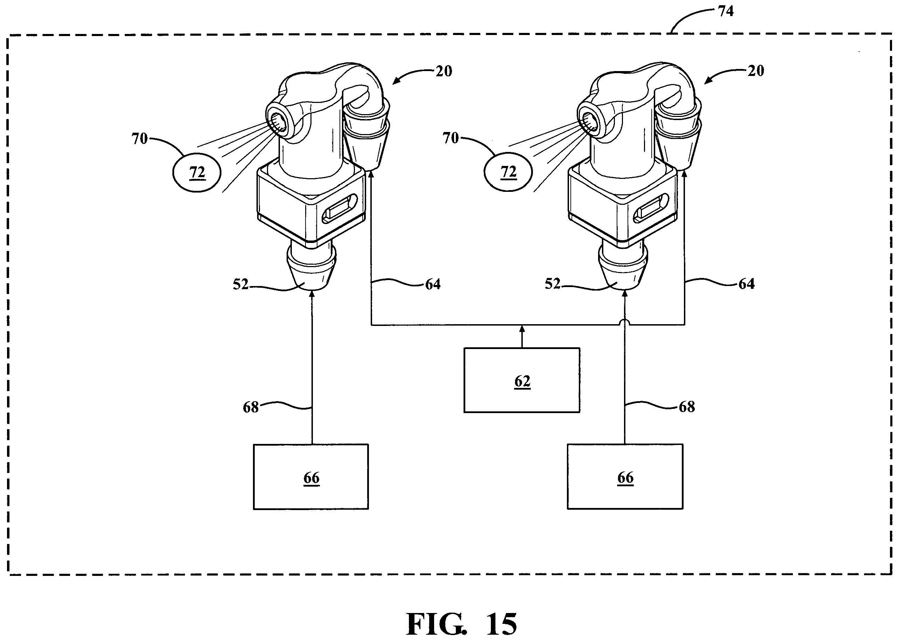

The system 60 may comprise but one of the nozzle assembly 20, such as illustrated by the schematic of the system 60 shown in Figure 13 or, alternatively, may comprise two or more nozzle assemblies 20 as shown in Figures 14-15. Likewise, it is to be appreciated that any number of nozzle assemblies 20 and/or systems 60 may be utilized, e.g. on a single vehicle, as described in additional detail below. For example, in particular embodiments, as illustrated by the schematic of Figure 14, the system 60 may include two nozzle assemblies 20. When more than one of the nozzle assemblies 20 is utilized, each of the nozzle assemblies 20 is independently selected and may be the same or substantially the same, or different from one another, e.g. with respect to size, dimension, positioning, fluid/media sources, etc. For example, in some such embodiments, the nozzle assemblies 20 may be connected to a common first media source 62 along the active fluid flow path 64 and/or a common second media source 66 along the passive fluid flow path 68, as illustrated by the schematic shown in Figure 14. However, the nozzle assemblies 20 need not share media sources. For example, in some embodiments, the nozzle assemblies 20 may be connected to a common first media source 62 (e.g. a compressed air supply, such as an air compressor) along the active fluid flow path 64, but to individual/distinct second media sources 66 (e.g. cleaning solution reservoirs) along the passive fluid flow path 68, as illustrated by the schematic shown in Figure 15.

In certain embodiments, the system 60 comprising the nozzle assembly 20 is adapted or otherwise configured for cleaning a surface 72 of a component 70 a vehicle, such as the vehicle illustrated schematically and generally designated at 74 in Figure 15. In such embodiments, the nozzle assembly 20 may be provided on the vehicle 74 in various locations to the clean various surfaces (72) thereof. For example, the nozzle assembly 20 can be hood mounted, under hood mounted, cowl screen mounted, wiper arm mounted, integrated in or mounted on/to a rear end spoiler or a center high-mounted stop lamp (CHMSL), bumper, trunk, door, etc. The nozzle assembly 20 may be mounted in concealed fashion, or near-concealed fashion, for example within a bumper or panel of the vehicle 74. However, the vehicle 74 may comprise the surface 72 as part of any object 70, such as a component of a camera, sensor, front windshield, rear windshield, headlight or headlamp, and the like, such that the nozzle assembly 20 may be fixed to a structure of the vehicle 74 near such a component (70) to be cleaned, without regard to concealment. While not shown, in some embodiments, the vehicle 74 may comprise at least two systems 60, which may be independently selected, and may be the same or substantially the same, or different from one another, e.g. with respect to the type of fluids/media utilized, the number of nozzle assemblies 20 utilized, the type of component 70 or surface 72 to be cleaned, etc.

It is to be appreciated that the operation of the nozzle assembly 20 and/or the system 60 comprising the same may be initiated, controlled, and or terminated by various methods and techniques known in the art. For example, while not shown, the system 60 may comprise a valve connected to a controlled power supply, such that an open/close status of the valve can be controlled on demand from a control unit (not shown). In this fashion, the supplies of fluids/media to the nozzle assembly 20 can be automated (e.g. with compressed air supplied automatically at predetermined intervals or on an as-needed basis), manual (e.g. via operation of a switch (e.g. in a cabin of the vehicle 112) actuatable by an operator/ driver), or both.

The above description relates to general and specific embodiments of the disclosure. However, various alterations and changes can be made without departing from the broader aspects of the disclosure as defined in the appended claims, which are to be interpreted in accordance with the principles of patent law including the doctrine of equivalents. As such, this disclosure is presented for illustrative purposes and should not be interpreted as an exhaustive description of all embodiments of the disclosure or to limit the scope of the claims to the specific elements illustrated or described in connection with these embodiments. Any reference to elements in the singular, for example, using the articles "a," "an," "the," or "said," is not to be construed as limiting the element to the singular. Further, it is to be understood that the terms "right angle," "orthogonal," and "parallel" are generally employed in a relative, and not an absolute sense, if/when employed herein.

Likewise, it is also to be understood that the appended claims are not limited to express and particular compounds, compositions, or methods described in the detailed description, which may vary between particular embodiments that fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

## Claims

1. A nozzle assembly (20) for delivering media to a surface, comprising:
a spray element (22) comprising an outlet (24) and an eductor (26) adapted for directing a dual-media jet through the outlet (24), the eductor (26) comprising a mixing barrel (28) that extends along an axis between the outlet (24) and a diffusion portion (30) that comprises an injection port (32) disposed about a central intake duct (36);
an active conduit (38) adapted for directing a pressurized stream of a first media into the eductor (26) of the spray element (22), the active conduit (38) comprising an inlet (40) for receiving the first media and a pair of constricted channels (42) that each extend between the inlet (40) and the injection port (32) of the spray element (22); and
a passive conduit (44) adapted for passage of a second media into the eductor (26) of the spray element (22), the passive conduit (44) comprising an intake (46) for receiving a passive feed of the second media and a feed shaft (48) that extends between the intake (46) and the central intake duct (36) of the spray element (22) between the pair of constricted channels (42) of the active conduit (38).

2. The nozzle assembly (20) of claim 1, wherein the spray element (22) further comprises a radial diffuser (34) disposed in the injection port (32).

3. The nozzle assembly (20) of claim 1 or 2, wherein the nozzle assembly (20) comprises a pair of spray elements (22) such that the nozzle assembly (20) comprises two outlets (24) from which media can be sprayed during operation, wherein each spray element (22) comprises an injection port (32) in communication with the channel (42) of the active conduit (38), an intake duct (36) in communication with the feed shaft (48) of the passive conduit (44), and an outlet (24) through which media can be delivered.

4. The nozzle assembly (20) of any one of claims 1-3, wherein the first media and the second media are fluids of different phases, and wherein the mixing barrel (28) of the eductor (26) is adapted to prepare the jet of dual media as a two-phase flow from the first media and the second media.

5. The nozzle assembly (20) of any one of claims 1-4, wherein the mixing barrel (28) of the eductor (26) is adapted to prepare the dual-media jet in situ via entraining the second media in the first media.

6. The nozzle assembly (20) of any one of claims 1-5, wherein: (i) the first media is a gas; (ii) the second media is a liquid; or (iii) both (i) and (ii).

7. The nozzle assembly (20) of claim 6, wherein the first media is air; and wherein the nozzle assembly (20) further comprises a compressed air supply (62) operatively coupled to the inlet (40) of the active conduit (38).

8. The nozzle assembly (20) of claim 6 or 7, wherein the second media is further defined as a cleaning fluid; and wherein the nozzle assembly (20) further comprises a cleaning fluid reservoir (66) operatively coupled to the intake of the passive conduit (44).

9. The nozzle assembly (20) of any one of claims 1-8, further comprising a housing (50) disposed about the spray element (22), the active conduit (38), and the passive conduit (44).

10. The nozzle assembly (20) of claim 9, further comprising an adapter (52) operatively coupled to the housing (50) and configured for receiving the second media from a media source (66), wherein the adapter (52) defines a duct (54) in fluid communication with the intake (46) of the passive conduit (44),

11. The nozzle assembly (20) of claim 10, wherein the adapter (52) comprises: (i) a connector; (ii) a check valve; or (iii) both (i) and (ii).

12. The nozzle assembly (20) of any one of claims 9-11, wherein: (i) the spray element (22) is monolithic in construction; (ii) the active conduit (38) is monolithic in construction; (iii) the passive conduit (44) is monolithic in construction; (iv) the housing (50) is monolithic in construction; (v) the nozzle assembly (20) comprises a polymeric material; or (vi) any of (i)-(v).

13. The nozzle assembly (20) of any one of claims 1-12, wherein: (i) the nozzle assembly (20) is integrally formed; (ii) the nozzle assembly (20) is prepared via additive manufacturing; or (iii) both (i) and (ii).

14. A system (60) comprising the nozzle assembly (20) of any one of claims 1-13, a first media source (62) operatively coupled to the active conduit (38) of the nozzle assembly (20), a second media source (66) operatively coupled to the passive conduit (44) of the nozzle assembly (20), and a sensor (70) disposed adjacent and in line with the outlet (24) such that a dual-media jet directed from the outlet (24) of the nozzle assembly (20) will contact a surface (72) of the sensor (70).

15. The system of claim 14, wherein: (i) the first media is air and the first media source (62) is a compressed air supply (62); (ii) the second media is a cleaning fluid and the second media source (66) is a cleaning fluid reservoir (66); (iii) the sensor (70) is a camera; (iv) the system (60) is a vehicle component; or (v) any of (i)-(iv).

## Patentansprüche

1. Düsenanordnung (20) zum Zuführen von Medien zu einer Oberfläche, umfassend:
ein Sprühelement (22) mit einem Auslass (24) und einem Ejektor (26), der dazu ausgelegt ist, einen Doppelmedienstrahl durch den Auslass (24) zu leiten, wobei der Ejektor (26) einen Mischzylinder (28) umfasst, der sich entlang einer Achse zwischen dem Auslass (24) und einem Diffusionsabschnitt (30) erstreckt, der eine Einspritzöffnung (32) umfasst, die um einen zentralen Aufnahmekanal (36) herum angeordnet ist;
eine aktive Leitung (38), die dazu ausgelegt ist, einen unter Druck stehenden Strom eines ersten Mediums in den Ejektor (26) des Sprühelements (22) zu leiten, wobei die aktive Leitung (38) einen Einlass (40) zum Aufnehmen des ersten Mediums und ein Paar verengte Kanäle (42) umfasst, die sich jeweils zwischen dem Einlass (40) und der Einspritzöffnung (32) des Sprühelements (22) erstrecken; und
eine passive Leitung (44), die zum Durchleiten eines zweiten Mediums in den Ejektor (26) des Sprühelements (22) ausgelegt ist, wobei die passive Leitung (44) eine Aufnahme (46) zum Aufnehmen einer passiven Zufuhr des zweiten Mediums und einen Zufuhrschaft (48) umfasst, der sich zwischen der Aufnahme (46) und dem zentralen Aufnahmekanal (36) des Sprühelements (22) zwischen dem Paar verengter Kanäle (42) der aktiven Leitung (38) erstreckt.

2. Düsenanordnung (20) nach Anspruch 1, wobei das Sprühelement (22) ferner einen radialen Diffusor (34) umfasst, der in der Einspritzöffnung (32) angeordnet ist.

3. Düsenanordnung (20) nach Anspruch 1 oder 2, wobei die Düsenanordnung (20) ein Paar Sprühelemente (22) umfasst, so dass die Düsenanordnung (20) zwei Auslässe (24) umfasst, aus denen während des Betriebs Medien versprüht werden können,
wobei jedes Sprühelement (22) eine Einspritzöffnung (32) umfasst, die mit dem Kanal (42) der aktiven Leitung in Verbindung steht (38), einen Aufnahmekanal (36), der mit dem Zufuhrschaft (48) der passiven Leitung (44) in Verbindung steht, und einen Auslass (24), durch den Medien abgegeben werden können, umfasst.

4. Düsenanordnung (20) nach einem der Ansprüche 1 bis 3, wobei das erste Medium und das zweite Medium Fluide unterschiedlicher Phasen sind und wobei der Mischzylinder (28) des Ejektors (26) dazu ausgelegt ist, den Strahl aus zwei Medien als zweiphasigen Strom aus dem ersten Medium und dem zweiten Medium bereitzustellen.

5. Düsenanordnung (20) nach einem der Ansprüche 1 bis 4, wobei der Mischzylinder (28) des Ejektors (26) dazu ausgelegt ist, den Zwei-Medien-Strahl in situ durch Mitreißen des zweiten Mediums in das erste Medium herzustellen.

6. Düsenanordnung (20) nach einem der Ansprüche 1 bis 5, wobei (i) das erste Medium ein Gas ist; (ii) das zweite Medium eine Flüssigkeit ist; oder (iii) sowohl (i) als auch (ii) zutreffen.

7. Düsenanordnung (20) nach Anspruch 6, wobei das erste Medium Luft ist; und wobei die Düsenanordnung (20) ferner eine Druckluftzufuhr (62) umfasst, die funktionsfähig mit dem Einlass (40) der aktiven Leitung (38) gekoppelt ist.

8. Düsenanordnung (20) nach Anspruch 6 oder 7, wobei das zweite Medium ferner als Reinigungsfluid definiert ist; und wobei die Düsenanordnung (20) ferner einen Reinigungsfluidbehälter (66) umfasst, der funktionsfähig mit der Aufnahme der passiven Leitung (44) gekoppelt ist.

9. Düsenanordnung (20) nach einem der Ansprüche 1 bis 8, die ferner ein Gehäuse (50) umfasst, das um das Sprühelement (22), die aktive Leitung (38) und die passive Leitung (44) herum angeordnet ist.

10. Düsenanordnung (20) nach Anspruch 9, die ferner einen Adapter (52) umfasst, der funktionsfähig mit dem Gehäuse (50) gekoppelt und zum Empfangen des zweiten Mediums von einer Mediumquelle (66) konfiguriert ist, wobei der Adapter (52) einen Kanal (54) in Fluidverbindung mit der Aufnahme (46) der passiven Leitung (44) definiert.

11. Düsenanordnung (20) nach Anspruch 10, wobei der Adapter (52) umfasst: (i) einen Verbinder; (ii) ein Rückschlagventil; oder (iii) sowohl (i) als auch (ii).

12. Düsenanordnung (20) nach einem der Ansprüche 9 bis 11, wobei (i) das Sprühelement (22) monolithisch aufgebaut ist; (ii) die aktive Leitung (38) monolithisch aufgebaut ist; (iii) die passive Leitung (44) monolithisch aufgebaut ist; (iv) das Gehäuse (50) monolithisch aufgebaut ist; (v) die Düsenanordnung (20) ein polymeres Material umfasst; oder (vi) eine beliebige Kombination aus (i) bis (v).

13. Düsenanordnung (20) nach einem der Ansprüche 1 bis 12, wobei: (i) die Düsenanordnung (20) einstückig ausgebildet ist; (ii) die Düsenanordnung (20) durch additive Fertigung hergestellt ist; oder (iii) sowohl (i) als auch (ii) zutreffen.

14. System (60), umfassend die Düsenanordnung (20) nach einem der Ansprüche 1 bis 13, eine erste Mediumquelle (62), die funktionsfähig mit der aktiven Leitung (38) der Düsenanordnung (20) verbunden ist, eine zweite Mediumquelle (66), die funktionsfähig mit der passiven Leitung (44) der Düsenanordnung (20) gekoppelt ist, und einen Sensor (70), der benachbart und in einer Linie mit dem Auslass (24) angeordnet ist, so dass ein Zwei-Medien-Strahl, der von dem Auslass (24) der Düsenanordnung (20) gerichtet ist, eine Oberfläche (72) des Sensors (70) kontaktiert.

15. System nach Anspruch 14, wobei (i) das erste Medium Luft ist und die erste Mediumquelle (62) eine Druckluftversorgung (62) ist; (ii) das zweite Medium eine Reinigungsflüssigkeit ist und die zweite Mediumquelle (66) ein Reinigungsflüssigkeitsbehälter (66) ist; (iii) der Sensor (70) eine Kamera ist; (iv) das System (60) eine Fahrzeugkomponente ist; oder (v) eine beliebige Kombination aus (i) bis (iv).

## Revendications

1. Ensemble buse (20) destiné à distribuer un milieu à une surface, comprenant :
un élément de pulvérisation (22) comprenant une sortie (24) et un éjecteur (26) adapté pour diriger un jet à double milieux à travers la sortie (24), l'éjecteur (26) comprenant un cylindre de mélange (28) qui s'étend le long d'un axe entre la sortie (24) et une partie de diffusion (30) qui comprend un orifice d'injection (32) disposé autour d'un conduit d'admission central (36) ;
une conduite active (38) adaptée pour diriger un flux sous pression d'un premier milieu dans l'éjecteur (26) de l'élément de pulvérisation (22), la conduite active (38) comprenant une entrée (40) pour recevoir le premier milieu et une paire de canaux rétrécis (42) qui s'étendent chacun entre l'entrée (40) et l'orifice d'injection (32) de l'élément de pulvérisation (22) ; et
une conduite passive (44) adaptée pour le passage d'un second milieu dans l'éjecteur (26) de l'élément de pulvérisation (22), la conduite passive (44) comprenant une admission (46) destinée à recevoir une alimentation passive du second milieu et un arbre d'alimentation (48) qui s'étend entre l'admission (46) et le conduit d'admission central (36) de l'élément de pulvérisation (22) entre la paire de canaux rétrécis (42) de la conduite active (38).

2. Ensemble buse (20) de la revendication 1, dans lequel l'élément de pulvérisation (22) comprend en outre un diffuseur radial (34) disposé dans l'orifice d'injection (32).

3. Ensemble buse (20) de la revendication 1 ou 2, dans lequel l'ensemble buse (20) comprend une paire d'éléments de pulvérisation (22) de sorte que l'ensemble buse (20) comprend deux sorties (24) à partir desquelles un milieu peut être pulvérisé pendant un fonctionnement,
dans lequel chaque élément de pulvérisation (22) comprend un orifice d'injection (32) en communication avec le canal (42) de la conduite active (38), un conduit d'admission (36) en communication avec l'arbre d'alimentation (48) de la conduite passive (44), et une sortie (24) à travers laquelle un milieu peut être distribué.

4. Ensemble buse (20) de l'une quelconque des revendications 1 à 3, dans lequel le premier milieu et le second milieu sont des fluides de phases différentes, et dans lequel le cylindre de mélange (28) de l'éjecteur (26) est adapté pour préparer le jet de double milieux sous la forme d'un écoulement à deux phases à partir du premier milieu et du second milieu.

5. Ensemble buse (20) de l'une quelconque des revendications 1 à 4, dans lequel le cylindre de mélange (28) de l'éjecteur (26) est adapté pour préparer le jet à double milieu in situ par entraînement du second milieu dans le premier milieu.

6. Ensemble buse (20) de l'une quelconque des revendications 1 à 5, dans lequel : (i) le premier milieu est un gaz ; (ii) le second milieu est un liquide ; ou (iii) à la fois (i) et (ii).

7. Ensemble buse (20) de la revendication 6, dans lequel le premier milieu est de l'air ; et dans lequel l'ensemble buse (20) comprend en outre un approvisionnement en air comprimé (62) couplé de manière opérationnelle à l'entrée (40) de la conduite active (38).

8. Ensemble buse (20) de la revendication 6 ou 7, dans lequel le second milieu est en outre défini comme un fluide de nettoyage ; et dans lequel l'ensemble buse (20) comprend en outre un réservoir de fluide de nettoyage (66) couplé de manière opérationnelle à l'admission de la conduite passive (44).

9. Ensemble buse (20) de l'une quelconque des revendications 1 à 8, comprenant en outre un boîtier (50) disposé autour de l'élément de pulvérisation (22), de la conduite active (38) et de la conduite passive (44).

10. Ensemble buse (20) de la revendication 9, comprenant en outre un adaptateur (52) couplé de manière opérationnelle au boîtier (50) et conçu pour recevoir le second milieu à partir d'une source de milieu (66), dans lequel l'adaptateur (52) définit un conduit (54) en communication fluidique avec l'admission (46) de la conduite passive (44).

11. Ensemble buse (20) de la revendication 10, dans lequel l'adaptateur (52) comprend : (i) un raccord ; (ii) un clapet anti-retour ; ou (iii) à la fois (i) et (ii).

12. Ensemble buse (20) de l'une quelconque des revendications 9 à 11, dans lequel : (i) l'élément de pulvérisation (22) est de construction monolithique ; (ii) la conduite active (38) est de construction monolithique ; (iii) la conduite passive (44) est de construction monolithique ; (iv) le boîtier (50) est de construction monolithique ; (v) l'ensemble buse (20) comprend un matériau polymère ; ou (vi) l'un quelconque de (i) à (v).

13. Ensemble buse (20) de l'une quelconque des revendications 1 à 12, dans lequel : (i) l'ensemble buse (20) est formé d'un seul tenant ; (ii) l'ensemble buse (20) est préparé par fabrication additive ; ou (iii) à la fois (i) et (ii).

14. Système (60) comprenant l'ensemble buse (20) de l'une quelconque des revendications 1 à 13, une première source de milieu (62) couplée de manière opérationnelle à la conduite active (38) de l'ensemble buse (20), une seconde source de milieu (66) couplée de manière opérationnelle à la conduite passive (44) de l'ensemble buse (20), et un capteur (70) disposé de manière adjacente et en ligne avec la sortie (24) de sorte qu'un jet à double milieu dirigé à partir de la sortie (24) de l'ensemble buse (20) entrera en contact avec une surface (72) du capteur (70).

15. Système de la revendication 14, dans lequel : (i) le premier milieu est de l'air et la première source de milieu (62) est un approvisionnement en air comprimé (62) ; (ii) le second milieu est un fluide de nettoyage et la seconde source de milieu (66) est un réservoir de fluide de nettoyage (66) ; (iii) le capteur (70) est une caméra ; (iv) le système (60) est un composant de véhicule ; ou (v) l'un quelconque de (i) à (iv).
